(19)

Europäisches
Patentamt
European
Patent Office
Office européen
des brevets

(11) **EP 2 555 479 A1**

(12) **EUROPEAN PATENT APPLICATION**

(43) Date of publication:
**06.02.2013 Bulletin 2013/06**

(51) Int Cl.:
*H04L 25/02* (2006.01)     *H04L 25/03* (2006.01)

(21) Application number: **11176717.4**

(22) Date of filing: **05.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NTT DoCoMo, Inc.
Chiyoda-ku
Tokyo 100-6150 (JP)**

(72) Inventors:
• **Auer, Gunther
  80339 München (DE)**
• **Tyrrel, Alexander
  85737 Ismaning (DE)**
• **Hoeher, Peter Adam
  24226 Heikendorf (DE)**
• **Knievel, Christopher
  24105 Kiel (DE)**

(74) Representative: **Zinkler, Franz
  Patentanwälte Schoppe, Zimmermann, Stöckeler
  Zinkler & Partner
  Postfach 246
  82043 Pullach (DE)**

(54)     **Apparatus and method for estimating a channel coefficient of a data subchannel of a radio channel**

(57)     An apparatus (110) for estimating a channel coefficient (122) of a data subchannel of a radio channel comprises a reliability determiner (110) and a channel coefficient estimator (120). The radio channel comprises a reference subchannel and the data subchannel, wherein a reference symbol (102) is received through the reference subchannel. The reliability determiner (110) determines a reference subchannel reliability coefficient (112) based on the received reference symbol (102). The reference subchannel reliability coefficient (122) indicates a reliability of a correct detection of the received reference symbol (102). Further, the channel coefficient estimator (120) estimates a channel coefficient (122) of the data subchannel and determines a channel coefficient reliability indicator (124) of the channel coefficient (122) based on the reference subchannel reliability coefficient (112) and a detection error coefficient (114). The channel coefficient reliability indicator (124) indicates a reliability of the estimated channel coefficient (122). Further, the detection error coefficient (114) indicates a probability of an erroneous detection of a data symbol received through the data subchannel. The consideration of the detection error coefficient (114) has a decreasing influence on the reliability of the estimated channel coefficient (122) indicated by the channel coefficient reliability indicator (124).

FIG 1A

**Description**

Embodiments according to the invention relate to the field of radio channel estimation as it is used in wireless communication systems and particularly to an apparatus and a method for estimating a channel coefficient of a data subchannel of a radio channel.

Systems employing multiple transmit and receive antennas, known as multiple-input multiple-output (MIMO) systems, promise significant gains in channel capacity. Together with orthogonal frequency-division multiplexing (OFDM), MIMO-OFDM is selected for beyond 3rd generation (B3G) mobile communication systems.

A multi-dimensional factor-graph-based soft channel estimation and data detection scheme has been presented in C. Knievel, Z. Shi, P. A. Hoeher, and G. Auer, "2D graph-based soft channel estimation for MIMO-OFDM," in Proc. IEEE Int. Conf. on Communications (ICC), Cape Town, South Africa, May 2010. Messages of data symbols and channel coefficients are exchanged within the structure of a factor-graph according to the sumproduct algorithm. The complexity of the graph-based receiver is significantly reduced by approximating the messages as Gaussian variables. Hence, they are completely characterized by a mean and variance value $CN$ ($\mu$, $\sigma^2$), Reliability information about the data and coefficient estimates are represented by the corresponding variances. The calculation of a variance of a message is mainly influenced by the noise and fading characteristics of a channel.

It is the object of the present invention to provide an improved concept for channel estimation in wireless communication systems, which allows to reduce the bit error rate and/or increase the data throughput.

This object is solved by an apparatus according to claim 1 or a method according to claim 14.

An embodiment of the invention provides an apparatus for estimating a channel coefficient of a data subchannel of a radio channel comprising a reliability determiner and channel coefficient estimator. The radio channel comprises a reference subchannel and the data channel, wherein a reference symbol is received through the reference subchannel. The reliability determiner is configured to determine a reference subchannel reliability coefficient based on the received reference symbol. The reference subchannel reliability coefficient indicates a reliability of a correct detection of the received reference symbol. Further, the channel coefficient estimator is configured to estimate a channel coefficient of the data subchannel. Additionally, the channel coefficient estimator is configured to determine a channel coefficient reliability indicator of the channel coefficient based on the reference subchannel reliability coefficient and a detection error coefficient. The channel coefficient reliability indicator indicates a reliability of the estimated channel coefficient. Further, the detection error coefficient indicates a probability of an erroneous detection of a data symbol received through the data subchannel. The consideration of the detection error coefficient has a decreasing influence on the reliability of the estimated channel coefficient indicated by the channel coefficient reliability indicator.

Embodiments according to the present invention are based on the central idea that the consideration of a probability of an erroneous detection of a data symbol in a factor graph based channel coefficient estimation concept can reduce the bit error rate and/or increase the data throughput, since without the consideration of the detection error an estimated channel coefficient may be assessed with too high reliability so that a wrong detection can be easily assessed as being faultless. By considering the detection error, the reliability of the estimated channel coefficient is judged closer to the real achievable reliability.

Some embodiments according to the invention relate to a decoder with an apparatus for estimating a channel coefficient and a channel decoder configured to decode data symbols received through the data subchannels based on estimated channel coefficients and channel coefficient reliability indicators.

In some embodiments according to the invention, the channel coefficient estimator determines a channel coefficient reliability indicator based on the reference subchannel reliability coefficient, the detection error coefficient and an edge effect coefficient. The edge effect coefficient takes into account the dependency of the reliability of the estimation of the channel coefficients on a distance of the data channel to an edge of a plurality of subchannels used for data bursts. In this way, edge effects of channels at the edge of the used subchannels of the radio channel can be considered, so that the reliability of the estimation of the channel coefficient is determined closer to the real achievable reliability. Consequently, the bit error rate can be decreased and/or the data throughput can be increased.

Embodiments according to the invention will be detailed subsequently referring to the appended drawings, in which:

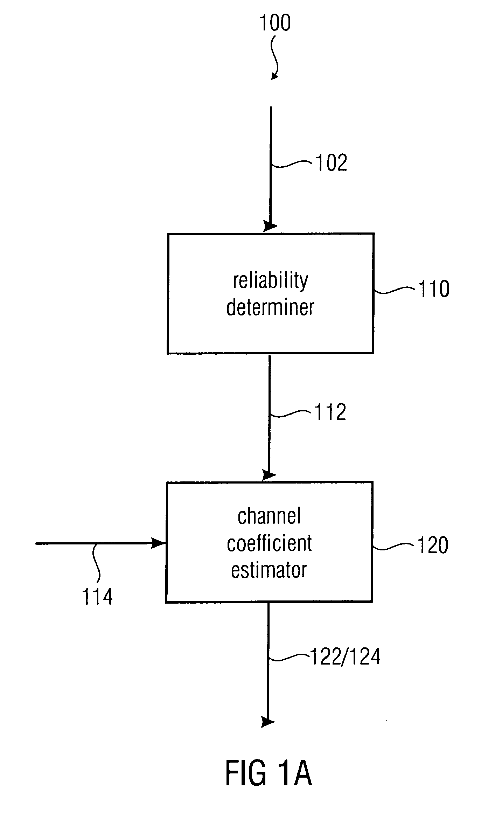

Fig. 1a a       is a block diagram of an apparatus for estimating a channel coefficient;

Fig. 1a        is a schematic illustration of reference subchannels and data subchannels of a radio channel;

Fig. 2        is a block diagram of a decoder;

Fig. 3        is a schematic illustration of a probability density function of *h*;

Fig. 4a, 4b     is a schematic illustration of a message exchange at a coefficient node;

Fig. 5a     is a schematic illustration of an influence of variance on the estimation of a channel coefficient and particularly an estimate of a channel coefficient at time index $i$;

Fig. 5b     is a schematic illustration of an influence of variance on the estimation of a channel coefficient and particularly an estimate of an adjacent channel coefficient at time index $i + 1$;

Fig. 5c     is a schematic illustration of an influence of variance on the estimation of a channel coefficient and particularly of an estimate of an adjacent channel coefficient at time index $i + 1$ taking detection errors into account;

Fig. 6     is a schematic illustration of the impact of edge effects on the estimation accuracy within a burst;

Fig. 7     is a schematic illustration of an estimated channel coefficient;

Fin, 8     is a schematic illustration of an increased variance $\sigma_e^2$ due to a detection error for 16-QAM modulations;

Fig. 9     is a schematic illustration of a structure of the factor graph divided into three sub-blocks;

Fig. 10     is a diagram representing a variance of the transfer mode for the different approaches;

Fig. 11     is a diagram representing a bit error rate comparison of the proposed optimization method;

Fig. 12     is a diagram representing a mean squared error at two signal to noise ratio points depending on the number of iterations;

Fig. 13     is a flowchart of a method for estimating a channel coefficient;

Fig. 14     is a schematic illustration of a possible target configuration;

Fig. 15     is a block diagram of a graph based iterative receiver;

Fig. 16     is a schematic illustration of a factor graph that describes a receiver architecture;

Fig. 17a     is a schematic illustration of a factor graph illustrating an error propagation at low fading;

Fig. 17b     is a schematic illustration of an estimated channel coefficient for an error propagation at slow fading;

Fig. 18a     is a schematic illustration of a factor graph illustrating an error propagation; and

Fig. 18b     is a schematic illustration of an estimated channel coefficient.

In the following, the same reference numerals are partly used for objects and functional units having the same or similar functional properties and the description thereof with regard to a figure shall apply also to other figures in order to reduce redundancy in the description of the embodiments.

The concept described below may be used in general for a channel estimation in wireless communication systems. The following introduction describes a possible channel model used for a channel estimation.

The MIMO-OFDM system under consideration consists of L OFDM subcarriers (or subchannels) and $K$ OFDM symbols per frame. The equivalent discrete-time model of a MIMO channel with $N_T$ transmit (Tx) and $N_R$ receive (Rx) antennas can be represented after OFDM demodulation as

$$y_n[l,k] = \sum_{m=1}^{N_T} h_{n,m}[l,k] \cdot x_m[l,k] + w_n[l,k]$$

$$= h_{n,m}[l,k]x_m[l,k] + \underbrace{\sum_{\substack{i=1 \\ i \neq m}}^{N_T} h_{n,i}[l,k]x_i[l,k]}_{\text{MAI}} + \underbrace{w_n[l,k]}_{\text{AWGN}},$$

$$(1)$$

where $l \in \{0,1,...,L-1\}$ represents the subcarrier index and $k \in \{0, 1,..., K -1\}$ the time index. The received symbol of receive antenna $n$, $y_n[l, k] \in$ C, consists of $N_T$ superimposed signals. The link between the $n$th Rx antenna and the $m$th Tx antenna is described by the channel coefficient $h_{n,m}[l, k] \in$ C. The channel coefficients are assumed to be wide-sense-stationary (WSS), complex Gaussian variables with zero mean. $x_m[l, k] \in$ C represents the channel input at the $m$th Tx antenna. $w_n[l, k]$ is an additive white Gaussian noise sample with zero mean and variance $\sigma_w^2$. The desired signal of the $m$th transmit antenna is thus superimposed with ($N_T$ - 1) interfering signals, termed multi-antenna interference (MAI), and the additive white Gaussian noise (AWGN) term.

The basic framework of the graph-based soft iterative receiver is given in detail in C. Knievel, Z. Shi, P. A. Hoeher, and. G. Auer, "2D graph-based soft channel estimation for MIMO-OFDM," in Proc. IEEE Int. Conf. on Communications (ICC), Cape Town, South Africa, May 2010; T. Wo, C. Liu, and P. A. Hoeher, "Graph-based iterative Gaussian detection with soft channel estimation for MIMO systems," in Proc. Int. ITG-Conf. on Source and Channel Coding (SCC), Ulm, Germany, Jan. 2008; and Z. Shi, T. Wo, P. A. Hoeher, and G. Auer, "Graph-based soft iterative receiver for higher-order modulation," in Proc. IEEE International Conference on Communication and Technology (ICCT '2010), Nanjing, China, Nov. 2010, and described briefly in the following.

For a SISO channel with zero-mean additive white Gaussian noise sample, the channel model can be simplified as

$$y = h \cdot x + w .$$

$$(2)$$

If x is known to the receiver, a least squares channel estimator (LSCE) yields

$$\hat{h} = y/x .$$

$$(3)$$

By substituting (2) into (3), it can be easily found that

$$h = \hat{h} - w/x .$$

$$(4)$$

Since x is known and w is a zero-mean Gaussian variable with variance $\sigma_w^2$, $w/x$ is also Gaussian distributed with variance $\sigma_w^2/|x|^2$. Hence, $h$ is also Gaussian distributed, The complete information of $h$ can thus be represented by mean $\mu_h$ and variance $\sigma_h^2$:

$$\mu_h = \hat{h}, \tag{5}$$

$$\sigma_h^2 = \sigma_w^2 / |x|^2. \tag{6}$$

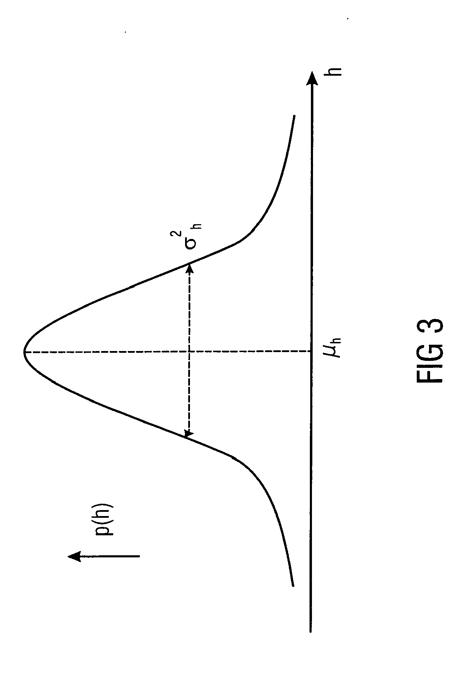

In this case, $\mu_h$ denotes the hard estimate of $h$ and $\sigma_h^2$ carries the reliability information of $h$. $p(h) \sim \mathcal{CN}(\mu_h, \sigma_h^2)$ is called the soft channel estimate (see Fig. 3).

During initialization only training symbols provide a priori information for the channel estimation process. The subsequent data detection process utilizes these initial channel coefficients to calculate estimates of the data symbols. Therefore, accurate channel coefficients needs to be available for each time and subcarrier index of the data symbols. In a time-varying frequency-selective channel, each time and subcarrier index has its own channel coefficient, but adjacent channel coefficients are correlated. In the graph-based channel estimator transfer nodes are introduced to exploit the correlation of channel coefficients and enable low complexity multi-dimensional channel estimation.

The purpose of the transfer nodes is to model the relation of neighboring channel coefficients, i.e., it converts the message of a channel coefficient $h_{n,m}$ [$l, k$] to $h_{n+n',m+m'}$ [$l+l'$, $k+k'$], which will be denoted with $h$ and $h'$ in the following to improve readability:

$$\Delta_{n',m'}[l', k'] \doteq h - \omega h', \qquad \omega \in \mathbb{C}. \tag{7}$$

In order to prevent short cycles and thus exchange of intrinsic information only neighboring channel coefficients of one domain are allowed to be connected, i.e., $l' = \pm 1 \rightarrow k' = n' = m' = 0$, $k' = \pm 1 \rightarrow l' = n' = m' = 0$, etc. Given a wide-sense-stationary uncorrelated-scattering (WSSUS) channel model, the transfer node is approximated by a zero-mean Gaussian pdf (probability density function):

$$\Delta_{n',m'}[l', k'] \sim \mathcal{N}\left(0, \sigma_{\Delta,n',m'}^2[l', k']\right). \tag{8}$$

Generally, the zero-mean approximation is only fulfilled under certain conditions, e.g., a Rayleigh fading channel (P. A. Bello, "Characterization of randomly time-variant linear channels," IEEE Trans. Commun., vol. 11, no. 4, pp. 360-393, Dec. 1963). However, given a Rician fading channel, the complex factor $\omega = e^{j\varphi}$ in (7) may be tuned such that the approximation is still valid. The variance $\sigma_{\Delta,n',m'}^2[l', k']$ is hereby minimized. Based on the transfer node (7), information between adjacent channel coefficients is exchanged as follows:

$$\mu_{h'} = \mu_h, \tag{9}$$

$$\sigma_{h'}^2 = \sigma_h^2 + \sigma_{\Delta,n',m'}^2[l', k']. \tag{10}$$

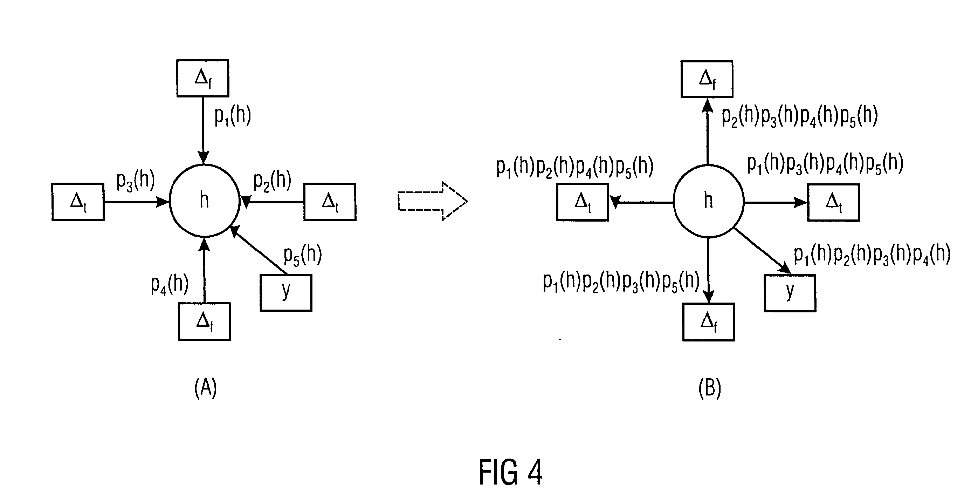

In general, a message generated at a certain node may consider all other connected nodes, except the node for which the message is generated in order to ensure that only extrinsic messages are exchanged. A coefficient node ($h$) is connected to two transfer nodes ($\Delta_t, \Delta_f$) in each domain (time, frequency, space) and a symbol node ($y$) as illustrated in Fig. 4a. Suppose a channel coefficient receives messages $p_i \sim \mathcal{CN}\left(\mu_i, \sigma_i^2\right)$, $i \in \{1,...,N\}$, where $N$ is the number of nodes connected to the coefficient nodes. $N$ - 1 incoming messages have to be considered in order to generate one outgoing message. The exchange of extrinsic messages is depicted in Fig. 4b. The product of Gaussian pdfs (probability density functions) results in another Gaussian pdf:

$$\left(\prod_{j=1,j\neq i}^{N} p_j(h)\right) \sim \mathcal{CN}\left(\mu_i, \sigma_i^2\right),$$

(11)

with

$$\mu_i = \frac{\sum_{j=1,j\neq i}^{N} \frac{\mu_j}{\sigma_j^2}}{\sum_{j=1,j\neq i}^{N} \frac{1}{\sigma_j^2}}, \qquad \sigma_i^2 = \frac{1}{\sum_{j=1,j\neq i}^{N} \frac{1}{\sigma_j^2}}.$$

(12)

As can be seen from (12), the variance of a message determines the influenced of this message to the overall message generation. Messages with a small variance have a stronger impact than messages with a high variance.

The updated messages of a coefficient node is sent to an observation $y_n$ where the symbol probabilities are calculated (data detection) according to

$$p\left(y_n|x_m\right) = \int p\left(y_n|h_{n,m}, x_m\right) p\left(h_{n,m}\right) dh_{n,m}$$

$$= \frac{1}{\pi\left(\sigma_{h,n,m}^2 + \sigma_{v,n,m}^2\right)} \exp\left(-\frac{|y_n - \mu_{v,n,m}|^2}{\sigma_{h,n,m}^2 + \sigma_{v,n,m}^2}\right)$$

(13)

The variance of the effective noise term as well as the uncertainty of the channel coefficient is taken into account to calculate the symbol probability. Hence, an unreliable channel estimate reduces the log-likelihood ratio for the corresponding data symbol.

Fig. 1a shows a block diagram of an apparatus 100 for estimating a channel coefficient 122 of a data subchannel of a radio channel according to an embodiment of the invention. The radio channel comprises a reference subchannel and the data subchannel, wherein a reference symbol 102 is received through the reference subchannel. The apparatus 100 comprises a reliability determiner 110 connected to a channel coefficient estimator 120. The reliability determiner 110 determines a reference subchannel reliability coefficient 112 based on (or depending on) the received reference symbol 102. The reference subchannel reliability coefficient 112 indicates a reliability of a correct detection of the received reference symbol 102. In other words, the reference subchannel reliability coefficient 112 represents an information of an accuracy of a detection of the received reference symbol 102. In this way, the reference subchannel reliability coefficient 112 depends on the received reference symbol 102. Further, the channel coefficient determiner 120 estimates a channel coefficient 122 of the data subchannel and determines a channel coefficient reliability indicator 124 of the channel coefficient 122 based on (or depending on) the reference subchannel reliability coefficient 112 and a detection error coefficient 114. The channel coefficient reliability indicator 124 indicates a reliability of the estimated channel coefficient 122. Further, the detection error coefficient 114 indicates a probability of an erroneous detection of a data symbol received through the data subchannel. The consideration of the detection error coefficient 114 has a decreasing influence on the reliability of the estimated channel coefficient 122 indicated by the channel coefficient reliability indicator 124.

By considering the decreasing influence of a possible detection error to the reliability of the estimated channel coefficient, the estimated channel coefficient 122 in combination with the determined channel coefficient reliability indicator 124 represent a more accurate approximation of the actual achievable reliability for the channel coefficient estimation. Therefore, an erroneous identification of an erroneous symbol as being a correct symbol can be significantly reduced. Therefore, the bit error rate can be reduced. Alternatively, or additionally, the data throughput (or sum data throughput) can be increased, if a better bit error rate is not necessary.

The radio channel comprises a plurality of subchannels used for transmitting symbols to a receiver comprising the apparatus 100. A subchannel of the radio channel may be a subchannel in time (e.g. symbols are sent during different time intervals representing subchannels in time), subchannels in frequency (e.g. OFDM) or subchannels in space (MIMO system). A subchannel may also be called a subcarrier. Some of the subchannels of the radio channel represent reference subchannels for receiving reference symbols. A reference symbol may also be called training symbol or pilot symbol.

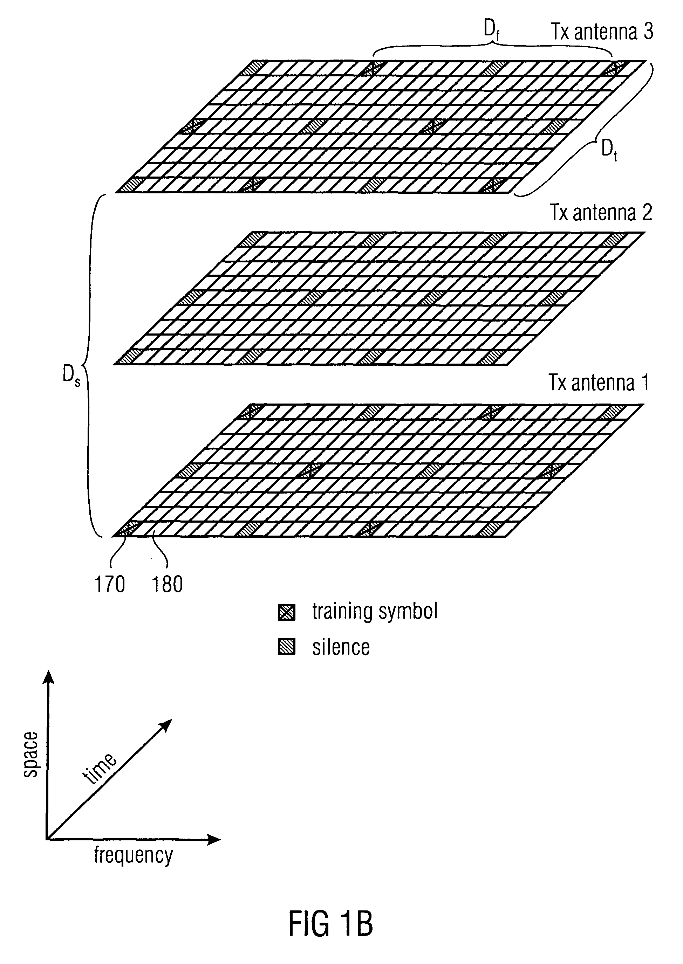

Fig. 1b shows a 3-dimensional (3D) pilot pattern or pilot grid. According to Fig. 1b, the distribution of pilot symbols is 3-dimensional and disjoint. For the spacing of the pilot symbols in the spatial domain, $D_s$ is used as a parameter. In Fig. 1b, grey squares with a cross indicate a training symbol, where grey squares indicate silence. Fig. 1b illustrates the distance in the radio channel between adjacent reference subchannels. For example, at the bottom plane shown in Fig. 1b, there are two training symbols located in the frequency domain, which have a spacing of 16 subcarriers, as an example. The same way the distance between the two reference subchannels in the time domain in the example of Fig. 1b is four time slots. It can also be seen from Fig. 1b that the distance for the spatial domain is two transmit antennas. In reference to the above description of the apparatus 100 a first reference subchannel 170 and a data subchannel 180 are exemplified in Fig. 1b.

Fig. 1b shows a disjoint pilot pattern for three transmit antennas. The spacing of pilots in time $D_t$, frequency $D_f$ and space $D_s$ are given for the effective pilot symbol spacing.

If user-specific transmit processing is applied, i.e. e.g. in case of zero-forcing precoding, the need for a second type of pilot symbols may arise, for example, so-called dedicated pilots. Dedicated pilots are also subject to user-specific transmit processing, whereas common pilots can be used for all available users. The implementation of dedicated pilots is straightforward and needs no further change in the graph-based channel estimation.

The apparatus 100 may be used for a graph based channel estimation as it is described before, for example. In this case, the reference subchannel and the data subchannel may be represented by coefficient nodes in the factor graphs and the reference subchannel reliability coefficient 112 may be exchanged through a transfer node.

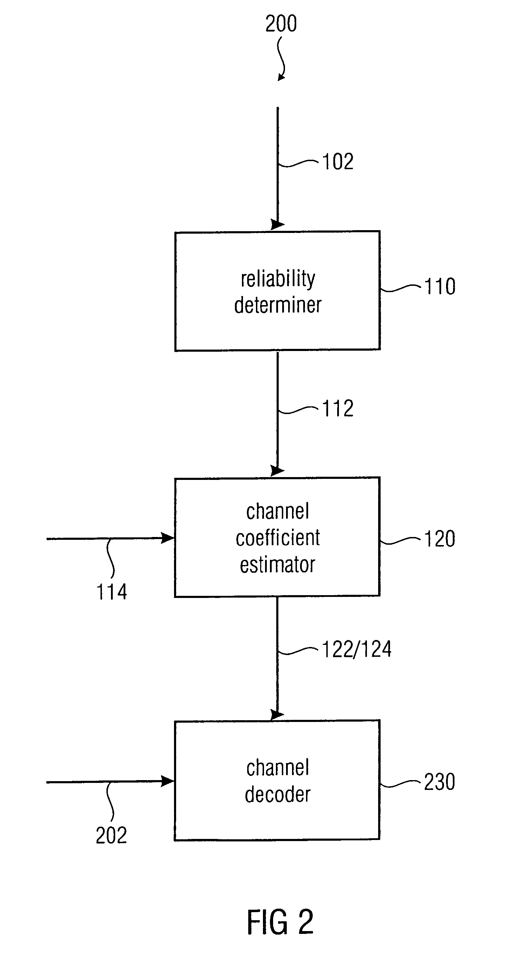

The apparatus 100 may be part of a decoder for decoding data symbols received through the radio channel. Fig. 2 shows a block diagram of a decoder 200 according to an embodiment of the invention. The decoder 200 comprises an apparatus for estimating a channel coefficient 122 and a channel decoder 230. The apparatus for estimating a channel coefficient represents an apparatus described above. The reliability determiner 110 of the apparatus is connected to the channel coefficient estimator 120 of the apparatus and the channel estimator 120 of the apparatus is connected to the channel decoder 230. The channel decoder 230 decodes a data symbol 202 received through the data channel based on (or depending on) the estimated channel coefficient 122 and the channel coefficient reliability indicator 124.

In this way, the probability of a correct decoding of a data symbol 202 is increased, since the reliability of the reception through the reference subchannel as well as a possible detection error of a reception through the data subchannel is considered for decoding the data symbol by using the channel coefficient reliability indicator 124.

In some embodiments according to the invention, the decoder 200 may work based on the turbo decoding concept. In this case, the channel decoder 230 may decode a data symbol and may additionally determine a new detection error coefficient 114 based on the decoding of the data symbol 202. This new detection error coefficient 114 may be fed back to the channel coefficient estimator 120 for a further iteration of the estimation of the channel coefficient 124. In other words, the channel decoder 230 may determine a detection error coefficient 114 based on the decoding of the data symbol for a following iteration of an estimation of the channel coefficient 122.

In more detail, the channel coefficient estimator 120 and the channel decoder 230 may iteratively estimate the channel coefficient 122 and decode the data symbol 202. In this case, the channel coefficient determiner 120 estimates the channel coefficient 122 and determines the channel coefficient reliability indicator 124 during an (current) iteration based on (or depending on) the reference subchannel reliability coefficient 112 and a detection error coefficient 114 determined by the channel decoder 230 during a preceding iteration. Then, the channel decoder 230 decodes the data symbol 202 during the (current) iteration based on the channel coefficient 122 and the channel coefficient reliability indicator 124 determined during the same (current) iteration, and determines a detection error coefficient 114 based on the decoding of the data symbol 202 for a following iteration of an estimation of the channel coefficient 122 by the channel coefficient estimator 120.

The detection error coefficient 114 may be defined in various ways. This can reach from a same constant value for all subchannels of the radio channel to an individually determined value for each subchannel of the radio channel.

For example, the detection error coefficient 114 may depend on a system setup, for example a reference symbol density, a modulation scheme of the received symbols or a number of transmit antennas of a node transmitting symbols through the radio channel to a receiver comprising the decoder 200 or an apparatus described above. Alternatively, if the system setup stays constant, the detection error coefficient 114 may be constant (a constant value). In both cases, the detection error coefficient 140 may be equal (the same) for at least 50 % (or 20 %, 80 % or 90 %) of the subchannels of the radio channel or the detection error coefficient 114 may be the same for all subchannels of the radio channel. Using the same detection error coefficient 114 for most or all subchannels of the radio channel may reduce the required memory, but may also reduce the maximal achievable data rate and/or the minimal achievable bit error rate. Alternatively, the detection error coefficient 114 may be based on a noise variance of the radio channel or a subchannel of the radio channel. In this case, the detection error coefficient 114 can be determined individually for each subchannel of the radio channel or for the radio channel as a whole. In this case the detection error coefficient 114 may be determined repeatedly in regular time intervals to adapt the detection error coefficient 114 to the current noise situation of the radio channel or a subchannel. In comparison to the detection error coefficient 114 depending only on the system setup or a constant detection error coefficient 114, the computational effort in this example is higher, but the maximal achievable data throughput and/or the minimal achievable bit error rate may be better. Independent from the definition of the detection error coefficient 114, the channel decoder 230 may be configured to determine or calculate the detection error coefficient 114, for example.

As the detection error coefficient 114 represents an information about the data subchannel, the detection error coefficient 114 may be independent from the reliability of a correct detection of the reference symbol 102 received through the reference subchannel, so that the detection error coefficient 114 does not comprise an information about the reference subchannel.

In general, the reference subchannel reliability coefficient 112, the detection error coefficient 114 and the channel coefficient reliability indicator 124 offer information about the reliability of different parameters. This reliability information may be expressed in various ways, e.g. by variances. For example, the reference subchannel reliability coefficient 112 may represent the variance of a channel coefficient of the reference subchannel, the detection error coefficient 114 may represent an additional variance of the data subchannel due to the probability of an erroneous detection and the channel coefficient reliability indicator 124 may represent a variance of the estimated channel coefficient 122.

The channel coefficient reliability indicator 124 may be determined in various ways, e.g. depending on the definition of the reference subchannel reliability coefficient 112 and the detection error coefficient 114. For example, the channel coefficient estimator 120 may determine the channel coefficient reliability indicator 124 based on a sum of the reference subchannel reliability coefficient 112 and the detection error coefficient 114. In this way, the reliability of the estimated channel coefficient indicated by the channel coefficient reliability indicator 124 is decreased, since the channel coefficient reliability indicator 124 represents a variance, which is increased by adding the detection error coefficient 114. Further, a data subchannel reliability coefficient similar to the reference subchannel reliability coefficient 112 (determined based on a received data symbol) may be added to the sum of the reference subchannel reliability coefficient 112 and the detection error coefficient 114.

The wording that the channel coefficient reliability indicator 124 of the channel coefficient 122 is based on the reference subchannel reliability coefficient 112 and a detection error coefficient 114 means that the channel coefficient reliability indicator 124 is based at least on these two coefficients. A dependency on one or more further coefficients or parameters (e.g. reliability of a correct detection of a data symbol received through the data subchannel) is also possible.

In some embodiments according to the invention, an edge effect of an increasing mean squared error at the edge of a data burst (e.g. edge in frequency domain, edge in time domain or edge in space domain) may also be considered for determining the channel coefficient reliability indicator 124. In other words, the channel coefficient estimator 120 may estimate the channel coefficient 122 and determine the channel coefficient reliability indicator 124 based on the reference subchannel reliability coefficient 112, the detection error coefficient 114, and an edge effect coefficient. This edge effect coefficient indicates a dependency of the reliability of the estimation of the channel coefficient 122 on a position (distance to an edge in time, in frequency or space) of the data subchannel within a plurality of subchannels used for a data burst received through the radio channel comprising the plurality of subchannels.

In more detail, the edge effect coefficient may comprise a first value for a first data subchannel of the plurality of subchannels and a second value for a second data subchannel of the plurality of subchannels. A position of the first data subchannel comprises a higher distance to an edge of the plurality of subchannels than the second data subchannel. The edge effect coefficient has a more strongly decreasing influence on a reliability indicated by a channel coefficient reliability indicator 124 of the second data subchannel than to a reliability indicated by a channel coefficient reliability indicator 124 of the first data subchannel or (depending on the definition of the coefficients, e.g. an edge effect coefficient can be added or subtracted) has a stronger increasing influence on a reliability indicated by a channel coefficient reliability indicator 124 of the first data subchannel than to a reliability indicated by a channel coefficient reliability indicator 124 of the second data subchannel.

The edge effect coefficient may represent an additional variance of the data subchannel due to an edge effect within the plurality of subchannels of the radio channel.

In some embodiments the reliability information of reference subchannels is not only used for strongly correlated data subchannels (data subchannels with low distance in frequency, time or space to the reference subchannel), but also for data subchannels with weak correlation, since the information from a weakly correlated reference subchannel may be still more reliable than information from a strongly correlated data subchannel. In other words, the radio channel may comprise a first plurality of subchannels and a second plurality of subchannels comprising no common subchannels with the first plurality of subchannels. The first plurality of subchannels may contain a reference subchannel and a first data subchannel and the second plurality of subchannels may contain a second data subchannel. The data subchannels of the first plurality of subchannels comprise a stronger correlation to the reference subchannel in a radio domain (frequency domain, time domain or space domain) than the data subchannels of the second plurality of subchannels in the same radio domain. In this case, the channel coefficient estimator 120 may estimate a channel coefficient 122 of the second data subchannel and determine a channel coefficient reliability indicator 124 of the channel coefficient 122 of the second data subchannel based on (or depending on) the reference subchannel reliability coefficient 112 but independent from the channel coefficient reliability indicator 124 of the channel coefficient 122 of the first data subchannel. Although the first data subchannels may be more strongly correlated to the second data subchannel than the reference subchannel, the reference subchannel reliability coefficient 112 is used and not the channel coefficient reliability indicator 124 of the channel coefficient 122 of the first data subchannel, since the information of the reference subchannel can still be more reliable.

The reliability determiner 110, the channel coefficient estimator 120, the channel decoder 230 and/or other optional units of the apparatus 100 or the decoder 200 may be independent hardware units or part of a computer, a microcontroller or a digital signal processor as well as a computer program or a software product for running on a computer, a microcontroller or a digital signal processor.

In the following, further embodiments are explained in more detail. The described features may be used together or may be used independently from each other in combination with the basic concept described above.

The variance of a message exchanged within a factor graph is influenced by three components, which are noise and fading characteristics of a channel, an estimation error and a detection error. These components mainly influence the uncertainty of a channel coefficient.

Noise and fading characteristics of a channel have been taken into account in known receivers and have been briefly described before. According to the proposed concept, estimation and detection errors may be considered also in this type of receiver structure. The optimization methods can be described for Gaussian messages exchanged within a factor graph, while they are not limited to the Gaussian case, but generally applicable. In the following examples for the influence of the estimation and detection error are described.

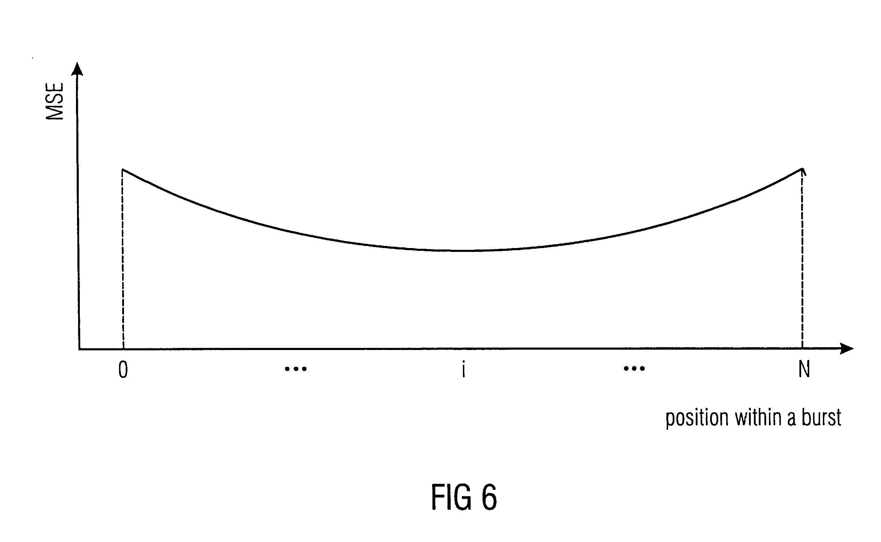

The calculation, of the variance of a transfer node in (7) is based on the actual channel coefficients, whereas the messages exchanged and thus their variances are based on estimates of the channel coefficients. Further, edge effects that distort estimates at the boundaries of a burst can be considered (influence of estimation error). In this way, the accuracy of the estimation can be made not consistent over the length of a burst (see also Fig. 6), Accordingly, messages at the edges of a burst should have higher variances compared to messages originated at the center of a burst.

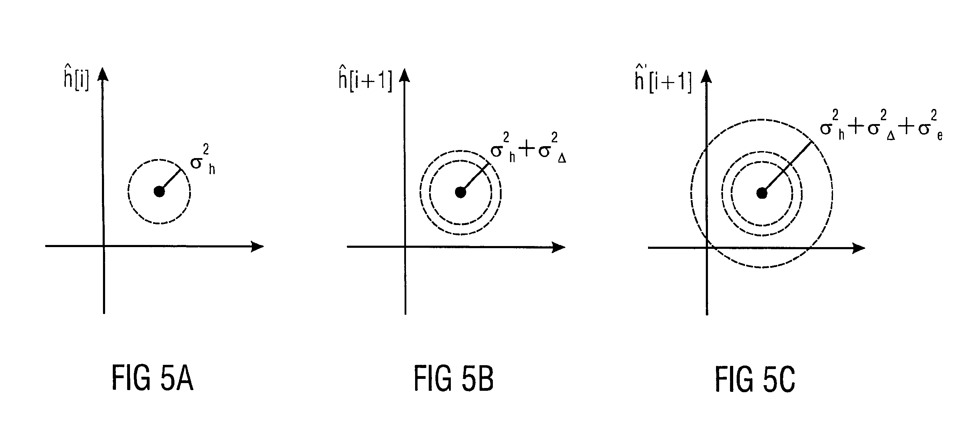

The variance of a channel coefficient (6) represents the uncertainty of an estimate introduced by the white noise of a channel (see Fig. 5a). An additional uncertainty of a fading channel is taken into account by (8) (see Fig. 5b). Further, the probability of an erroneously detected data symbol can be considered. A system setup with low training density, higher-order modulation, and multiple transmit antennas is sensitive to detection errors at low SNRs. In combination with channel coding, erroneous data symbols with high LLRs (log likelihood) may be generated. Given a slow fading channel the wrong detected data symbols easily influence the message generation of neighboring channel coefficients due to a low variance of the transfer node $\sigma_{\Delta,n',m'}^{\tilde{2}}[l',k']$ (reference subchannel reliability coefficient), i.e. error propagation occurs. A third variance is introduced $\sigma_e^2$ which represents the variance of detection errors (see Fig. 5c). In the following, different approaches to determine $\sigma_e^2$ (detection error coefficient) are presented.

The extrinsic log likelihood ratios (LLR) which are generated during iterations by the channel decoders reflect the reliability of the corresponding data symbol, i.e. an estimated data symbol is considered to be reliable when the magnitude of the LLR value is high and in turn is unreliable when the magnitude is low. In the presence of channel estimation it is possible to generate LLR values which are not correct, i.e. an LLR is large and the corresponding data bit is detected wrong. Nevertheless, LLR values of detected data symbols may be the only source of additional a priori information (besides training symbols) and if possible should be taken into account.

In order to implement the calculation of $\sigma_e^2$ (detection error coefficient) based on the bit error probability (BEP) the graph-based receiver is initialized as described in C. Knievel, Z. Shi, P. A. Hoeher, and G. Auer, "2D graph-based soft channel estimation for MIMO-OFDM," in Proc. IEEE Int. Conf. on Communications (ICC), Cape Town, South Africa, May 2010, for example. Training symbols may be used to initially estimate the channel coefficients. Subsequently, these channel estimates are used to detect the data symbols. Their information is sent to the channel decoders. Extrinsic information of the decoded data symbols are generated and fed back to the graph-based receiver where they are used as pseudo-training symbols to further improve the channel estimation.

The extrinsic information of the channel decoder after initialization $L^{(i=0)}$ may be used to calculate a mean bit error probability $\overline{P}_b^{(i=0)}$:

$$\overline{P}_b^{(i=0)} = \frac{1}{L \cdot K} \sum_{l=0}^{L} \sum_{k=0}^{K} \frac{1}{1 + \exp\left(|L^{(i=0)}[l,k]|\right)}. \tag{14}$$

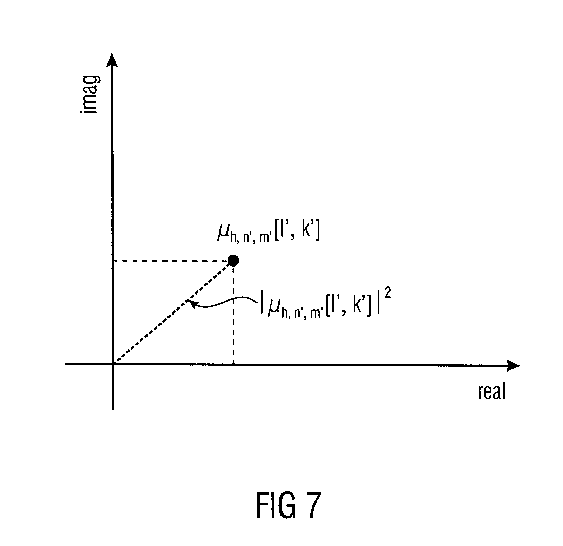

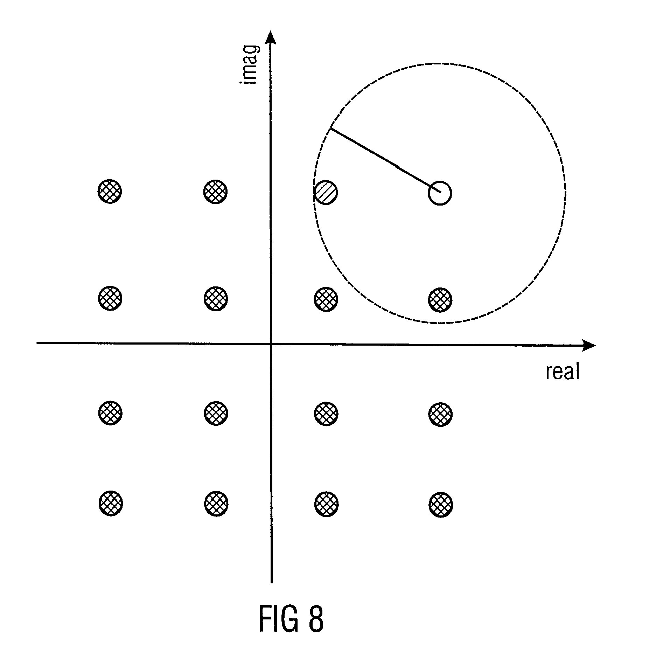

In the worst case scenario, the estimated coefficient is inverted in its phase, see also Fig. 7, which is most likely to happen with BPSK modulation. In higher-order modulation it is more likely that the phase and/or amplitude is shifted by a certain degree, depending on the erroneously detected symbol. An example is given in Fig. 8. To calculate $\sigma_e^2$ (detection error coefficient) we assume the event of an inverted phase occurs with the mean probability $\overline{P}_b$:

$$\sigma_{e,n',m'}^2[l',k'] = \overline{P}_b^{(i=0)} \cdot 2 \cdot |\mu_{h,n',m'}[l',k']|^2. \tag{15}$$

The message update of a transfer node (9) is changed accordingly

$$\mu_{h'} = \mu_h, \tag{16}$$

$$\sigma_{h'}^2 = \sigma_h^2 + \sigma_{\Delta,n',m'}^2[l',k'] + \sigma_{e,n',m'}^2[l',k']. \tag{17}$$

wherein $\sigma_{h'}^2$ is a channel coefficient reliability indicator, $\sigma_h^2$ is a data subchannel reliability coefficient, $\sigma_{\Delta,n',m'}^2[l',k']$ is a reference subchannel reliability coefficient and $\sigma_{e,n',m'}^2[l',k']$ is a detection error coefficient. The detection error coefficient has a decreasing influence on the reliability of the estimated channel coefficient indicated by the channel coefficient reliability indicator 124, since the channel coefficient reliability indicator represents a variance, which is increased by adding the detection error coefficient.

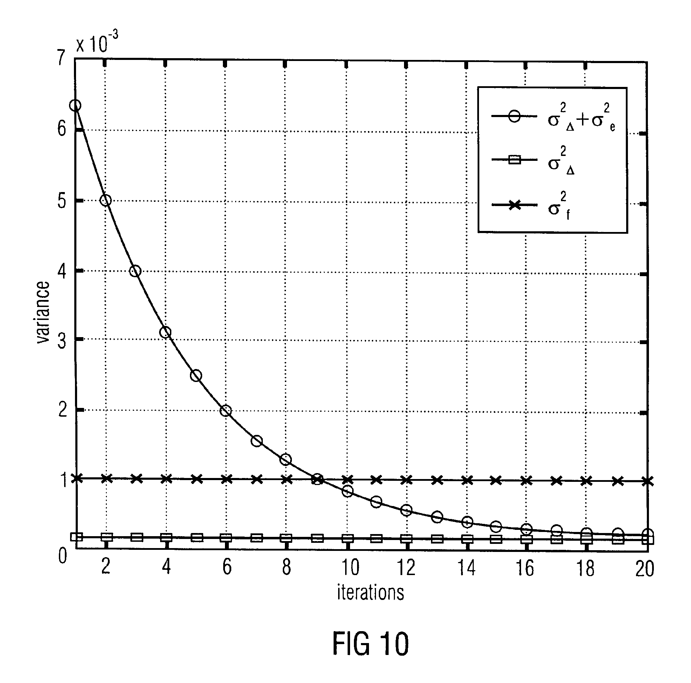

In subsequent iterations the mean bit error probability has to be re-calculated with the refined LLR values of the data estimates. The tuning factor $\alpha$ has to be chosen accordingly. Alternatively, a deterministic function can be used to decrease the error variance $\sigma_e^2$ (detection error coefficient) over iterations. An exponential decreasing function is illustrated in Fig. 10. The starting value for the blue line with circles $(\sigma_{\Delta}^2 + \sigma_e^2)$ (reference subchannel reliability coefficient plus detection error coefficient) is hereby chosen as an example and is determined by (15) and thus depends on the training density, modulation order, SNR, number of transmit and receive antennas, as well as the channel code and code rate.

Further, the noise variance has a major influence on the bit error probability and thus can also be used to

determine $\sigma_e^2$. However, as it is only one parameter out of many (e.g. training density, number of transmit and receive antennas, ...), the variance may be scaled depending on the system setup. Tabulated values (e.g. stored by a look up table) might be used, which decrease the computational complexity of the method. Furthermore, the variance should be decreased over iterations, which can be implemented by additional tabulated values or the above mentioned deterministic function. Hence, the course of the variance over iterations depending on the noise variance can be similar to the one depending on the bit error probability (BEP), varying only on the computation of the initial variance, for example.

In order to further reduce the computational complexity a fixed variance $\sigma_f^2$ (detection error coefficient) may be used. Tabulated values depending on the system setup can be used. Included in Fig. 10 is an example of an increased variance $\sigma_f^2$.

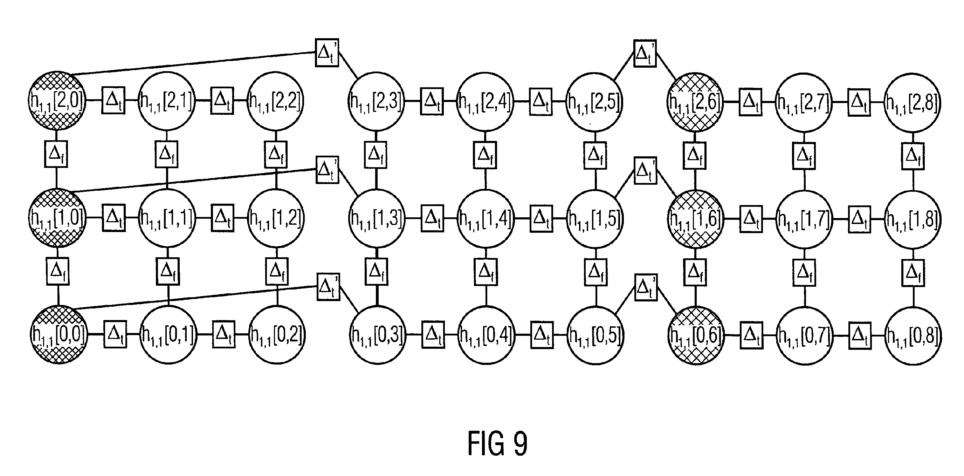

In some embodiments, a graph structure taking error propagation into account is used. In case of erroneously detected data symbols, error propagation is deteriorating the performance of the GSIR receiver (graph based iterative receiver). However, if the message exchange is constraint to a specific number of nodes, a wrong message influences only a limited number of neighbors. As training symbols are considered to be the only source of reliable a priori information, their information should be exchanged to all parts of the factor graph. Fig. 9 shows an example of a factor graph divided into sub-blocks. Each sub-block is connected with a training symbol (marked coefficient nodes) via specialized transfer nodes. Three sub-blocks are created in this example, which are connected with each other via specialized transfer nodes denoted with $\Delta_\ell'$ distributing the messages of training symbols only. Thus ensuring that reliable a priori information are used at each sub-block. Effectively, message exchange may take only place between training symbols. The number of sub-blocks should be adapted during the course of iterations as data symbols are detected more reliable and thus their information can contribute to improve the channel estimation.

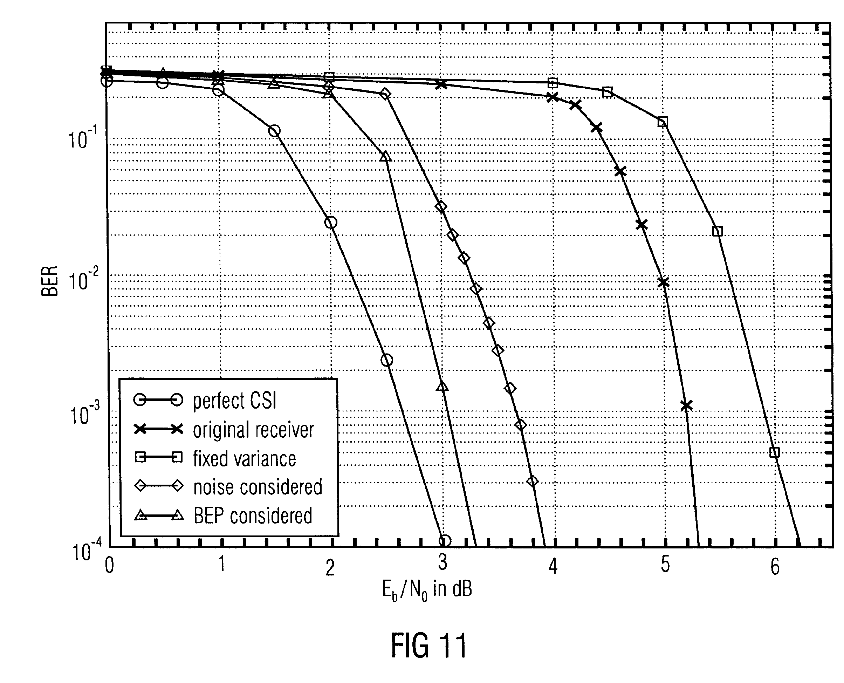

In the following some numerical results are shown. A MIMO-OFDM system with two transmit and four receive antennas is considered in the following. A turbo code with code rate R = 1/3 and 16-QAM modulation is used. The BER (bit error rate) results are given in Fig. 11 (bit error rate versus signal to noise ratio $E_b/N_0$ in dB). All BER results are obtained with a fixed number of 10 global iterations, which include one iteration for the GSIR and one turbo code iteration. As can be seen from Fig. 11 the original 3D GSIR is about 3.2 dB worse than the 3D GSIR with perfect channel state information (CSI) at an BER of $10^{-4}$, The deterioration of the original GSIR to the GSIR with perfect CSI can be mitigated by taking estimation and detection errors into account. The gain of the optimized 3D GSIR is nearly 3 dB compared to the original receiver. The gap to the perfect channel knowledge can be further reduced by increasing the number of iterations. The optimization in general is hereby not restricted to 3D GSIR but is working for all dimensions in general.

In other words, in this example, 16-QAM modulation (quadrature amplitude modulation) with 72 OFDM subcarriers and 14 OFDM symbols as well as a turbo code with a coding rate of R = 1/3 with 10 iterations is used. Further, transmit nodes with two transmit antennas and receive nodes with four receive antennas are used and a slow fading channel with 10 km/h is assumed. In this constellation, up to 3 dB gain compared to the original (conventional, known) solution is achievable. For the bit error rate, a consideration of the bit error probability as described above provides the best results.

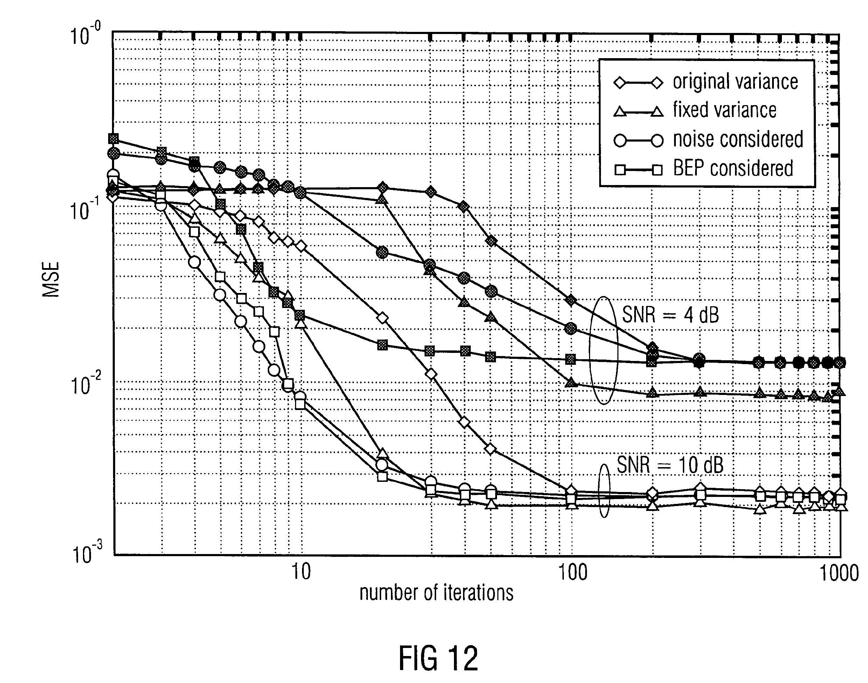

Further, Fig. 12 shows a mean squared error (MSE) comparison at two signal-to-noise ratio (SNR) points depending on the number of iterations for the original variance (without consideration of the detection error), fixed variance (constant value for the detection error coefficient), noise considered variance and bit error probability considered (BEP).

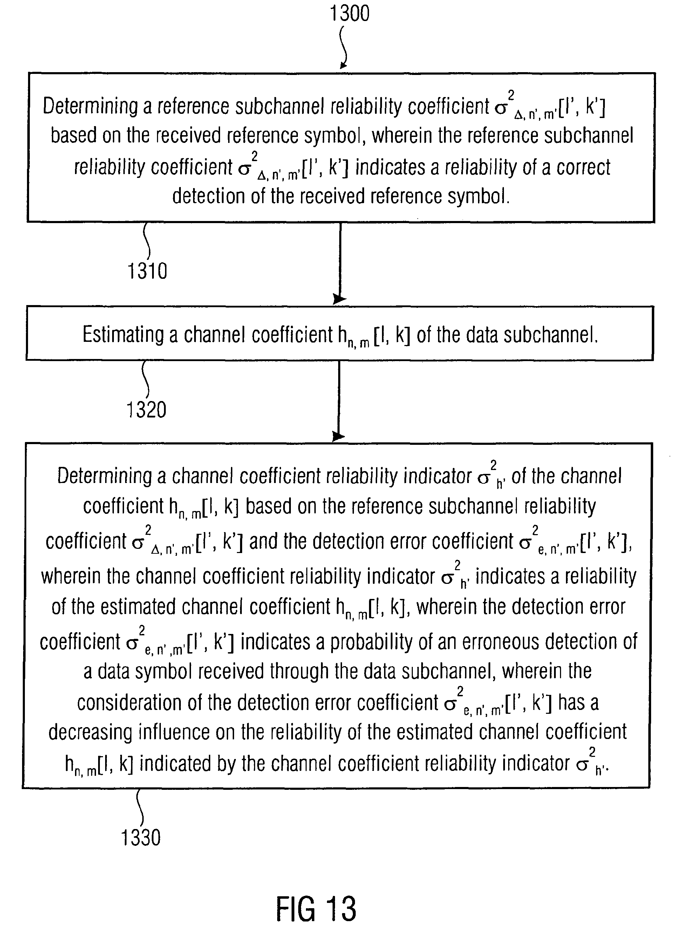

Fig. 13 shows a flowchart of a method 1300 for estimating a channel coefficient of a data subchannel of a radio channel according to an embodiment of the invention. A radio channel comprises a reference subchannel and the data subchannel, wherein a reference symbol is received through the reference subchannel. The method 1300 comprises determining 1310 a reference subchannel reliability coefficient based on the received reference symbol. The reference subchannel reliability coefficient indicates a reliability of a correct detection of the received reference symbol. Further, the method 1300 comprises estimating 1320 a channel coefficient of the data subchannel and determining 1330 a channel coefficient reliability indicator of the channel coefficient based on the reference subchannel reliability coefficient and the detection error coefficient. The channel coefficient reliability indicator indicates a reliability of the estimated channel coefficient. Further, the detection error coefficient indicates a probability of an erroneous detection of a data symbol received through the data subchannel. The consideration of the detection error coefficient has a decreasing influence on the reliability of the estimated channel coefficient indicated by the channel coefficient reliability indicator.

The method 1300 may comprise one or more additional steps realizing one or more aspects of the concept described above.

Some embodiments of the invention relate to a method to mitigate the effects of error propagation in an iterative turbo receiver that can be implemented by a factor graph by increasing the variance of the transfer nodes. The method may further comprise a means to set the additional variance of the transfer nodes by a predefined value or a noise variance. Alternatively, the method may comprise a means to adjust the additional variance of the transfer nodes by the average error probability. The means to determine the average error probability may determine the average error probability based on the log-likelihood ratios passed within the factor graph.

Some embodiments of the invention relate to an optimization of multidimensional factor graph based subchannel and data estimation. Reliability information of messages exchanged within the multi-dimensional factor graph may be calculated only on the basis of noise level and fading characteristics of a channel. The proposed optimization refines the calculation of the variance of a message taking estimation and/or detection errors into account. The accuracy of the channel estimation and data detection may be significantly improved.

By refining the variance calculation messages within a factor graph, the performance of both bit error ratio and mean squared error are significantly improved.

Some advantages are an improved performance in terms of bit error ratio in case of data detection and mean squared error in case of channel estimation, an improved convergence speed (Less iterations are needed to converge), an optimum performance is reached without complex initial channel estimation, and/or no a priori information about system setup (number of transmit, receive antennas, training density, ...) may be necessary.

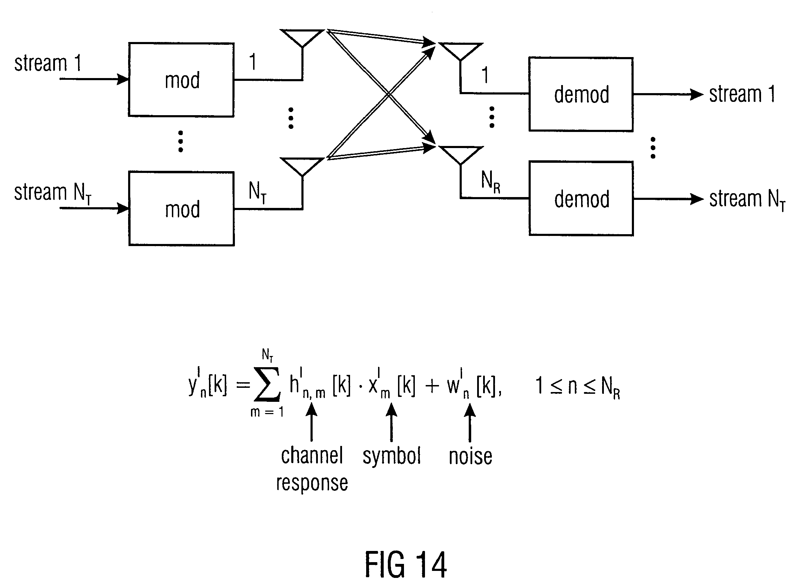

Fig. 14 shows a possible target configuration for a MIMO-OFDM downlink in a wireless communication system. In this configuration, symbols are transmitted by the base station (comprising modulator 1 to $N_T$) with $N_T$ antennas (stream 1 to stream $N_T$). After propagating through the channel, the receiver with $N_R$ receive antennas (and demodulators 1 to $N_R$) observes the signal $y_n^l$ as shown by the formula in Fig. 14. In this case $l$ is a subcarrier index, $k$ is a time index and $n$ is a transmit antenna index.

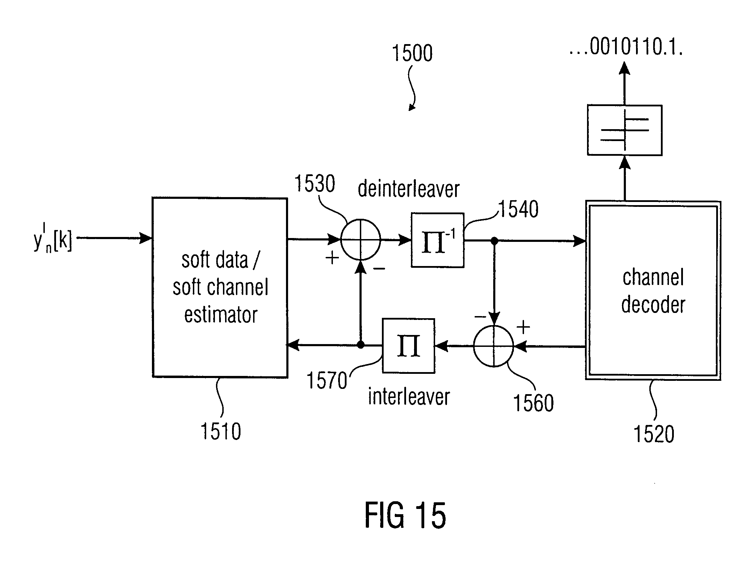

The proposed concept may be implemented by a graph based iterative receiver (GSIR) as it is shown in Fig. 15, for example. The receiver 1500 comprises a soft data or a soft channel estimator 1510 and a channel decoder 1520. The soft data or soft channel estimator 1510 represents or includes an apparatus for estimating a channel coefficient and realizes the functionality of the before mentioned reliability determiner and the channel coefficient estimator. The soft data or soft channel estimator 1510 can provide an estimated channel coefficient and a determined channel coefficient reliability indicator through a combiner (e.g. realized by a logical XOR) 1530 and a deinterleaver 1540 to the channel decoder 1520. The channel decoder 1520 may be realized as mentioned before and may provide a new detection error coefficient or a data subchannel reliability coefficient through a combiner (e.g. realized by a logical XOR) 1560 and an interleaver 1570 to the soft data or soft channel estimator 1510. This advanced receiver may be utilized to compensate for accuracy loss of channel estimates and/or to reduce pilot overhead (reference subchannel overhead). The proposed graph based soft channel estimator may be naturally integrated into an iterative receiver.

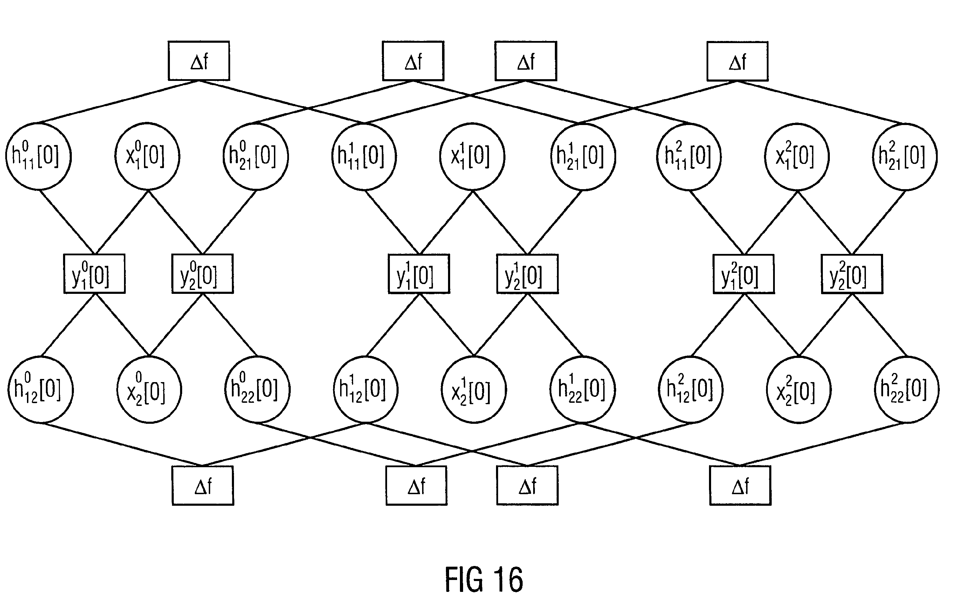

Fig. 16 illustrates a factor graph of a time-invariant MIMO-OFDM system with $N_T$=2 transmit antennas, $N_R$=2 receive antennas and L=3 subcarriers.

A factor graph, cf. F. R. Kschischang, B. J. Frey, and H.-A. Loeliger, "Factor graphs and the sumproduct algorithm," IEEE Trans. Inf. Theory, vol. 47, pp. 498-519, Feb. 2001, is a bipartite graph visualizing the factorization of certain global functions subject to maximization/minimization. In embodiments for data transmission, there are two uncertain variables to be estimated, the channel coefficients and the data symbols. Fig. 16 shows a possible factor graph of a time-invariant MIMO-OFDM system utilized in one embodiment.

In the factor graph of this embodiment, the square boxes with $y$ denote channel observation nodes. Circles with x represent symbol nodes and circles with $h$ represent channel coefficient nodes, i.e. subchannels, which are to be estimated. Embodiments using graph-based channel and data estimation may perform an extrinsic information exchange among different nodes. More details of the message passing rules among observation, data and channel coefficient nodes can be found in T. Wo, C. Liu, and P. A. Hoeher, "Graph-based iterative gaussian detection with soft channel estimation for MIMO systems," in Proc. ITG Int. Conf. on Source and Channel Coding, Ulm, Jan. 2008., T. Wo, C. Liu, and P. A. Hoeher, "Graph-based soft channel and data estimation for MIMO systems with asymmetric LDPC codes," in Proc. IEEE International Conference on Communications (ICC 2008), (Bejing, China), pp. 620-624, May 2008.

In embodiments, channel estimation may be carried out using the introduction of transfer nodes. In the factor graph, these transfer nodes are connected with the adjacent channel coefficient nodes. For 1D channel estimation in the frequency domain, these transfer nodes, denoted as $\Delta f$, can be used to represent the relationship between $h_{n,m}^l[k]$ and $h_{n,m}^{l+1}[k]$.

Similarly, in the time domain, the transfer nodes are connected between $h_{n,m}^l[k]$ and $h_{n,m}^l[k+1]$ by the transfer function $\Delta t$, The next section will be focused on describing the message passing rules of these transfer nodes in detail.

In other words, *y* are received symbols, *x* are transmitted symbols, *h* are channel coefficients and Δ*f* is a relationship between channel coefficients of adjacent subcarriers.

Compared to conventional pilot added channel estimation, the channel estimation and data detection are performed jointly and a soft channel estimation and data detection may be employed. Properties of the graph based iterative receiver (GSIR) are, for example, that messages exchanged with the factor are approximated as Gaussian variables. In this case, a mean value of a message represents the hard estimate and a variance of a message represents a reliability information. Messages with a large variance contribute less to a newly generated message.

In order to compute the transfer nodes Δ, error events are mainly influenced by free components, which are noise and fading characteristics of the channel, estimation errors and detection errors, which are not taken into account by known concepts. With known concepts, it may happen that symbols have large reliabilities, which are incorrect. The reliability of a message, in terms of variance, may be too optimistic since the possibility of detection errors is not taken into account in such known concepts, so that in slow fading channels, where conventional schemes perform well, graph based iterative receivers (GSIR) suffer from performance degradation.

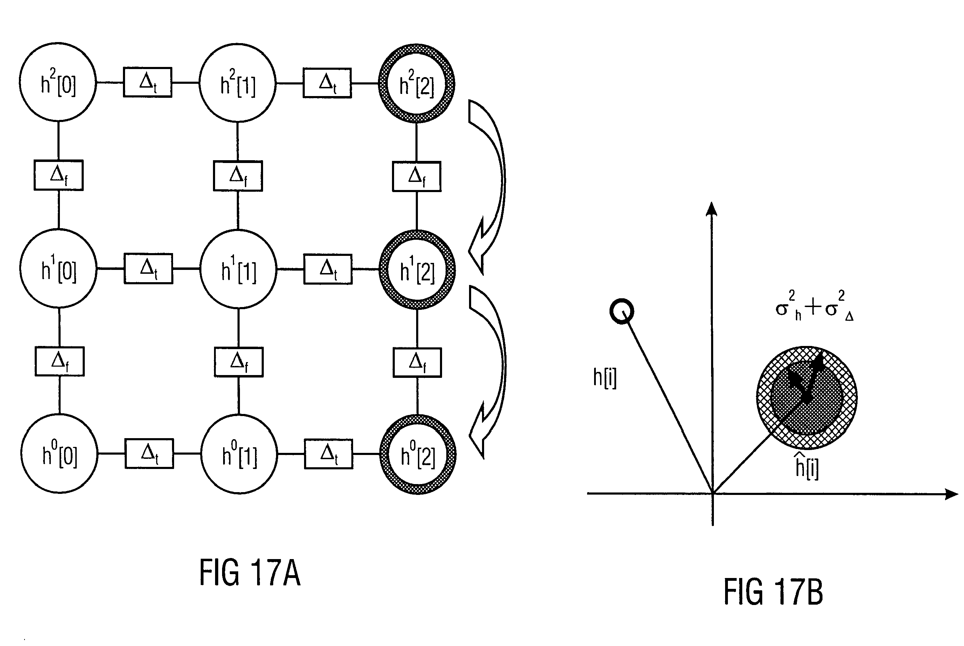

An error propagation at slow fading is shown, for example, in Figs. 17a and 17b. In this example, $\bar{\sigma}_h^2$ represents an estimate of a channel coefficient at time index *i*, $\sigma_h^2 + \sigma_\Delta^2$ represents an estimate of a channel coefficient at time index *i* + 1. For a large reliability, $\sigma_h^2$ is small and for slow fading, $\sigma_\Delta^2$ is small. Therefore, an error propagation is more likely.

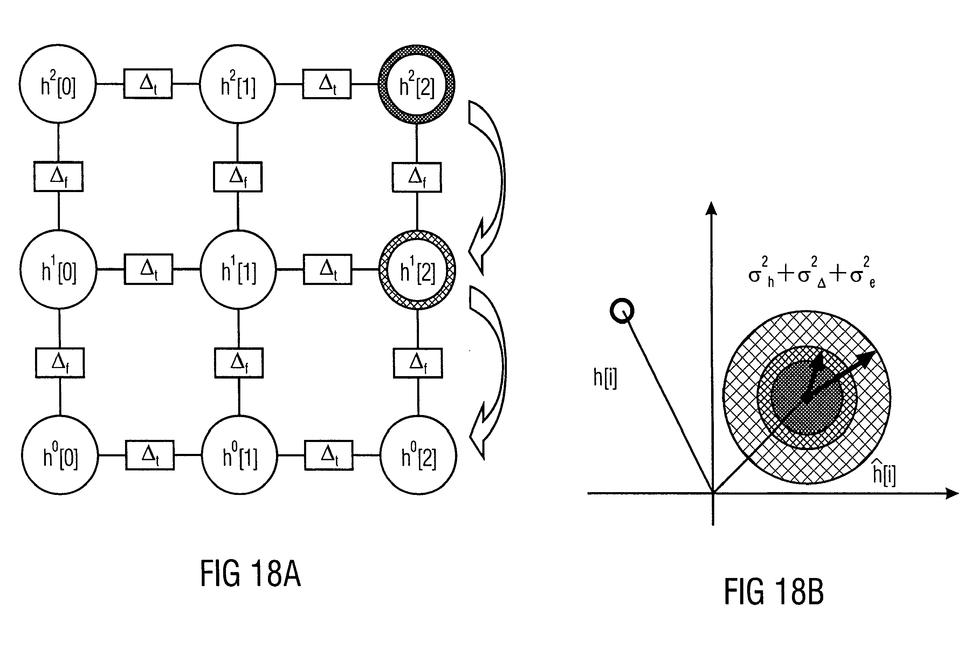

Therefore, an additional variance $\sigma_e^2$ may be introduced (detection error coefficient) so that the effect of the error propagation is reduced. This is shown in Fig. 18a and 18b. In this example, $\sigma_h^2 + \sigma_\Delta^2 + \bar{\sigma}_e^2$ represents an estimate of a channel coefficient at time index *i* + 1 with (considered) detection errors.

To model the occurrence of detection errors, choice of error variance $\sigma_e^2$ is to be determined. For example, a fixed variance, a variance according to a noise level $\sigma_e^2 = N_0$ or a variance according to an average error probability $P_b$ is set. In the last case, the error probability may be determined by the likelihood ratio of the data symbols, which are completely available at iterative turbo receivers.

Using the proposed concept can significantly improve the performance, especially at slow fading conditions, as GISR suffer severe performance degradation in this case. Further an enhanced robustness by mitigating error propagation can be achieved. Additionally, a quicker convergence can be reached, since less iteration may be needed compared to known solutions. Further, only a low additional complexity may be necessary, due to calculating the detection error variance (detection error coefficient).

The proposed concept may be used for advanced iterative receivers and interference suppression for MIMO-OFDM.

Some embodiments of the invention relate to a wireless communication system comprising a receiver with an apparatus for estimating a channel coefficient according to the described concept.

Although some aspects of the described concept have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Apparatus (100) for estimating a channel coefficient (122, $h_{n,m}[l,k]$) of a data subchannel of a radio channel, wherein the radio channel comprises a reference subchannel and the data subchannel, wherein a reference symbol (102) is received through the reference subchannel, the apparatus comprising:

   a reliability determiner (110) configured to determine a reference subchannel reliability coefficient (112, $\sigma^2_{\Delta,n',m'}[l',k']$) based on the received reference symbol (102), wherein the reference subchannel reliability coefficient (112, $\sigma^2_{\Delta,n',m'}[l',k']$) indicates a reliability of a correct detection of the received reference symbol (102); and

   a channel coefficient estimator (120) configured to estimate a channel coefficient (122, $h_{n,m}[l.k]$) of the data subchannel and configured to determine a channel coefficient reliability indicator (124, $\sigma^2_{h'}$) of the channel coefficient (122, $h_{n,m}[l.k]$) based on the reference subchannel reliability coefficient (112, $\sigma^2_{\Delta,n',m'}[l',k']$) and a detection error coefficient (114, $\sigma^2_{c,n',m'}[l',k']$), wherein the channel coefficient reliability indicator (124, $\sigma^2_{h'}$) indicates a reliability of the estimated channel coefficient (122, $h_{n,m}[l.k]$) wherein the detection error coefficient (114, $\sigma^2_{c,n',m'}[l',k']$) indicates a probability of an erroneous detection of a data symbol received through the data subchannel, wherein the consideration of the detection error coefficient (114, $\sigma^2_{c,n',m'}[l',k']$) has a decreasing influence on the reliability of the estimated channel coefficient (122, $h_{n,m}[l,k]$) indicated by the channel coefficient reliability indicator (124, $\sigma^2_{h'}$).

2. Decoder (200) with an apparatus according to claim 1, further comprising a channel decoder (230) configured to decode a data symbol received through the data subchannel based on the estimated channel coefficient (122, $h_{n,m}[l,k]$) and the channel coefficient reliability indicator (124, $\sigma^2_{h'}$).

3. Decoder according to claim 2, wherein the channel decoder (230) is configured to determine a detection error

coefficient (114, $\sigma^2_{e,n',m'}[l',k']$) based on the decoding of the data symbol for a following iteration of an estimation of the channel coefficient (122, $h_{n,m}[l,k]$).

4.   Decoder according to claim 3, wherein the channel coefficient estimator (120) and the c-hannel decoder (230) are configured to iteratively estimate the channel coefficient (122, $h_{n,m}[l,k]$) and decode the data symbol, wherein during an iteration the channel coefficient estimator (120) is configured to estimate the channel coefficient (122, $h_{n,m}[l,k]$) and determine the channel coefficient reliability indicator (124, $\sigma^2_{h'}$) based on the reference subchannel reliability coefficient (112, $\sigma^2_{\Delta,n',m'}[l',k']$) and a detection error coefficient (114, $\sigma^2_{c,n',m'}[l',k']$) determined by the channel decoder (230) during a preceding iteration and the channel decoder 230) is configured to decode the data symbol during the iteration based on the channel coefficient (122, $h_{n,m}[l,k]$) and the channel coefficient reliability indicator (124, $\sigma^2_{h'}$) of the same iteration and determine a detection error coefficient (114, $\sigma^2_{e,n',m'}[l',k']$) based on the decoding of the data symbol for a following iteration of an estimation of the channel coefficient (122, $h_{n,m}[l,k]$) by the channel coefficient, estimator (120).

5.   Apparatus or decoder according to one of the claims 1 to 4, wherein the detection error coefficient (114, $\sigma^2_{e,n',m'}[l',k']$) depends on a reference symbol density, a modulation scheme of the received symbol (102) or a number of transmit antennas of a node transmitting symbols through the radio channel, wherein the detection error coefficient (114, $\sigma^2_{e,n',m'}[l',k']$) is equal for at least 50% of the subchannels of the radio channel.

6.   Apparatus or decoder according to one of the claims 1 to 5, wherein the detection error coefficient (114, $\sigma^2_{e,n',m'}[l',k']$) is based on a noise variance of the radio channel or a subchannel of the radio channel.

7.   Apparatus or decoder according to one of the claims 1 to 4, wherein the detection error coefficient (114, $\sigma^2_{e,n',m'}[l',k']$) is constant and equal for at least 50% of the subchannels of the radio channel.

8.   Apparatus or decoder according to one of the claims 1 to 7, wherein the detection error coefficient (114, $\sigma^2_{c,n',m'}[l',k']$) is independent from the reliability of a correct detection of the reference symbol (102) received through the reference subchannel.

9.   Apparatus or decoder according to one of the claims 1 to 8, wherein the reference subchannel reliability coefficient (112, $\sigma^2_{\Delta,n',m'}[l',k']$) represents a variance of a channel coefficient of the reference subchannel, the detection error coefficient (114, $\sigma^2_{c,n',m'}[l',k']$) represents an additional variance of the data subchannel due to the probability of an erroneous detection and the channel coefficient reliability indicator (124, $\sigma^2_{h'}$) represents a variance of the estimated channel coefficient (122, $h_{n,m}[l,k]$).

10.  Apparatus or decoder According to claim 9, wherein the channel coefficient estimator (120) is configured to determine the channel coefficient reliability indicator (124, $\sigma^2_{h'}$) based on a sum of the reference subchannel reliability coefficient (112, $\sigma^2_{\Delta,n',m'}[l',k']$) and the detection error coefficient (114, $\sigma^2_{c,n',m'}[l',k']$).

11.  Apparatus or decoder according to one of the claims 1 to 10, wherein the channel coefficient estimator (120) is configured to estimate the channel coefficient (122, $h_{n',m'}[l',k']$) and determine the channel coefficient reliability indi-

cator (124, $\sigma_{h'}^2$) based on the reference subchannel reliability coefficient (112, $\sigma_{\Delta,n',m'}^2[l',k']$), the detection error coefficient (114, $\sigma_{e,n',m'}^2[l',k']$) and an edge effect coefficient, wherein the edge effect coefficient indicates a dependency of the reliability of the estimation of the channel coefficient (122, $h_{n,m}[l,k]$) on a position of the data subchannel within a plurality of subchannels used for a data burst received through the radio channel comprising the plurality of subchannels.

12. Apparatus or decoder according to claim 11, wherein the edge effect coefficient comprises a first value for a first data subchannel of the plurality of subchannels and a second value for a second data subchannel of the plurality of subchannels, wherein a position of the first data subchannel comprises a higher distance to an edge of the plurality of subchannels than the second data subchannel, wherein the edge effect coefficient has a stronger decreasing influence on a reliability indicated by a channel coefficient reliability indicator (124, $\sigma_{h'}^2$) of the second data subchannel than to a reliability indicated by a channel coefficient reliability indicator (124, $\sigma_{h'}^2$) of the first data subchannel or has a stronger increasing influence on a reliability indicated by a channel coefficient reliability indicator (124, $\sigma_{h'}^2$) of the first data subchannel than to a reliability indicated by a channel coefficient reliability indicator (124, $\sigma_{h'}^2$) of the second data subchannel.

13. Apparatus or decoder according to one of the claims 1 to 12, wherein the radio channel comprises a first plurality of subchannels and a second plurality of subchannels, wherein the first plurality of subchannels and the second plurality of subchannels comprise no common subchannel, wherein the data subchannel corresponds to a first data subchannel, wherein the first plurality of subchannels contains the reference subchannel and the first data subchannel and the second plurality of subchannels contains a second data subchannel, wherein the data subchannels of the first plurality of subchannels comprises stronger correlation to the reference subchannel in a radio domain than the data subchannels of the second plurality of subchannels in the same radio domain, wherein the channel coefficient estimators (120) is configured to estimate a channel coefficient (122, $h_{n,m}[l,k]$) of the second data subchannel and configured to determine a channel coefficient reliability indicator (124, $\sigma_{h'}^2$) of the channel coefficient (122, $h_{n,m}[l,k]$) of the second data subchannel based on the reference subchannel reliability coefficient (112, $\sigma_{\Delta,n',m'}^2[l',k']$) but independent from the channel coefficient reliability indicator (124, $\sigma_{h'}^2$) of the channel coefficient (122, $h_{n,m}[l,k]$) of the first data subchannel.

14. Method (1300) for estimating a channel coefficient ($h_{n,m}[l,k]$) of a data subchannel, of a radio channel, wherein a radio channel comprises a reference subchannel and the data subchannel, wherein a reference symbol is received through the reference subchannel, the method comprising:

determining (1310) a reference subchannel reliability coefficient ($\sigma_{\Delta,n',m'}^2[l',k']$) based on the received reference symbol, wherein the reference subchannel reliability coefficient ($\sigma_{\Delta,n',m'}^2[l',k']$) indicates a reliability of a correct detection of the received reference symbol;
estimating (1320) a channel coefficient ($h_{n,m}[l,k]$) of the data subchannel; and

determining (1330) a channel coefficient reliability indicator ($\sigma_{h'}^2$) of the channel coefficient ($h_{n,m}[l,k]$) based on the reference subchannel reliability coefficient ($\sigma_{\Delta,n',m'}^2[l',k']$) and the detection error coefficient ($\sigma_{e,n',m'}^2[l',k']$), wherein the ($\sigma_{\Delta,n',m'}^2[l',k']$) and the detection error coefficient ($\sigma_{e,n',m'}^2[l',k']$), wherein the channel coefficient reliability indicator ($\sigma_{h'}^2$) indicates a reliability of the estimated channel coefficient ($h_{n,m}[l,k]$), wherein the detection error coefficient

$(\sigma^2_{e,n',m'}[l',k'])$ indicates a probability of an erroneous detection of a data symbol received through the data subchannel, wherein the consideration of the detection error coefficient $(\sigma^2_{e,n',m'}[l',k'])$ has a decreasing influence on the reliability of the estimated channel coefficient ($h_{n,m}[l,k]$) indicated by the channel coefficient reliability indicator $(\sigma^2_{h'})$.

15. Computer program with a program code for performing the method according to claim 14, when the computer program runs on a computer or a microcontroller.

100

~102

reliability
determiner ~110

~112

channel
coefficient
estimator ~120

114

~122/124

FIG 1A

FIG 1B

200

102

reliability
determiner ⌇110

112

channel
coefficient ⌇120
estimator

114

122/124

channel
decoder ⌇230

202

FIG 2

FIG 3

FIG 4

FIG 5A

FIG 5B

FIG 5C

position within a burst

MSE

FIG 6

EP 2 555 479 A1

FIG 7

FIG 8

FIG 9

FIG 10

EP 2 555 479 A1

FIG 11

EP 2 555 479 A1

FIG 12

EP 2 555 479 A1

1300

Determining a reference subchannel reliability coefficient $\sigma^2_{\Delta, n', m'}[l', k']$ based on the received reference symbol, wherein the reference subchannel reliability coefficient $\sigma^2_{\Delta, n', m'}[l', k']$ indicates a reliability of a correct detection of the received reference symbol.

1310

Estimating a channel coefficient $h_{n, m}[l, k]$ of the data subchannel.

1320

Determining a channel coefficient reliability indicator $\sigma^2_{h'}$ of the channel coefficient $h_{n, m}[l, k]$ based on the reference subchannel reliability coefficient $\sigma^2_{\Delta, n', m'}[l', k']$ and the detection error coefficient $\sigma^2_{e, n', m'}[l', k']$, wherein the channel coefficient reliability indicator $\sigma^2_{h'}$ indicates a reliability of the estimated channel coefficient $h_{n, m}[l, k]$, wherein the detection error coefficient $\sigma^2_{e, n', m'}[l', k']$ indicates a probability of an erroneous detection of a data symbol received through the data subchannel, wherein the consideration of the detection error coefficient $\sigma^2_{e, n', m'}[l', k']$ has a decreasing influence on the reliability of the estimated channel coefficient $h_{n, m}[l, k]$ indicated by the channel coefficient reliability indicator $\sigma^2_{h'}$.

1330

FIG 13

$$y^{|}_{n}[k] = \sum_{m=1}^{N_T} h^{|}_{n,m}[k] \cdot x^{|}_{m}[k] + w^{|}_{n}[k], \qquad 1 \leq n \leq N_R$$

channel    symbol    noise
response

FIG 14

soft data / soft channel estimator  1510

1530  deinterleaver

$\Pi^{-1}$  1540

$y'_n[k]$

$\Pi$  interleaver  1570

1560

channel decoder  1520

...0010110.1.

1500

FIG 15

FIG 16

FIG 17A

FIG 17B

EP 2 555 479 A1

FIG 18A

FIG 18B

EP 2 555 479 A1

Europäisches
Patentamt

European
Patent Office

Office européen
des brevets

# EUROPEAN SEARCH REPORT

Application Number

EP 11 17 6717

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIANG XU ET AL: "Factor graph based detection and channel estimation for MIMO-OFDM systems in doubly selective channel", WIRELESS COMMUNICATION SYSTEMS (ISWCS), 2010 7TH INTERNATIONAL SYMPOSIUM ON, IEEE, PISCATAWAY, NJ, USA, 19 September 2010 (2010-09-19), pages 456-460, XP031792122, ISBN: 978-1-4244-6315-2 | 1-10,14, 15 | INV.<br>H04L25/02<br>H04L25/03 |
| Y | * the whole document *<br>----- | 11-13 | |
| X | XIANG XU ET AL: "Low Complexity Joint Channel Estimation and Decoding for LDPC Coded MIMO-OFDM Systems", VEHICULAR TECHNOLOGY CONFERENCE (VTC SPRING), 2011 IEEE 73RD, IEEE, 15 May 2011 (2011-05-15), pages 1-5, XP031896631, DOI: 10.1109/VETECS.2011.5956229 ISBN: 978-1-4244-8332-7 * abstract * * sections I, IIII, IV *<br>----- | 1-10,14, 15 | |
| X | US 2005/135324 A1 (KIM YUN-HEE [KR] ET AL) 23 June 2005 (2005-06-23) * paragraph [0065] - paragraph [0079] * * paragraph [0098] - paragraph [0119] *<br>----- | 1,14,15 | TECHNICAL FIELDS SEARCHED (IPC)<br><br>H04L |
| Y | EP 2 293 503 A1 (NTT DOCOMO INC [JP]) 9 March 2011 (2011-03-09) * paragraph [0013] - paragraph [0016] * * paragraph [0025] - paragraph [0030] * * paragraph [0049] - paragraph [0050] * * paragraph [0065] - paragraph [0066] * * paragraph [0076] - paragraph [0079] *<br>-----<br><br>-/-- | 11-13 | |

The present search report has been drawn up for all claims

| Place of search | Date of completion of the search | Examiner |
|---|---|---|
| Munich | 12 January 2012 | Palacián Lisa, Marta |

EPO FORM 1503 03.82 (P04C01)

Europäisches
Patentamt

European
Patent Office

Office européen
des brevets

# EUROPEAN SEARCH REPORT

Application Number

EP 11 17 6717

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TIANBIN WO ET AL: "Graph-Based Soft Channel and Data Estimation for MIMO Systems with Asymmetric LDPC Codes", IEEE INTERNATIONAL CONFERENCE ON COMMUNICATIONS, 2008 : ICC '08 ; 19 - 23 MAY 2008, BEIJING, CHINA, IEEE, PISCATAWAY, NJ, USA, 19 May 2008 (2008-05-19), pages 620-624, XP031265443, ISBN: 978-1-4244-2075-9 * abstract * * section III.B, III.C, IV * ----- | 1-15 | |
| A | KNIEVEL C ET AL: "2D Graph-Based Soft Channel Estimation for MIMO-OFDM", COMMUNICATIONS (ICC), 2010 IEEE INTERNATIONAL CONFERENCE ON, IEEE, PISCATAWAY, NJ, USA, 23 May 2010 (2010-05-23), pages 1-5, XP031703204, ISBN: 978-1-4244-6402-9 * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 12 January 2012 | Palacián Lisa, Marta |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

# EP 2 555 479 A1

## ANNEX TO THE EUROPEAN SEARCH REPORT
## ON EUROPEAN PATENT APPLICATION NO.

EP 11 17 6717

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2012

| Patent document cited in search report | | Publication date | Patent family member(s) | | Publication date |
|---|---|---|---|---|---|
| US 2005135324 | A1 | 23-06-2005 | KR 20050060631 A | | 22-06-2005 |
| | | | US 2005135324 A1 | | 23-06-2005 |
| EP 2293503 | A1 | 09-03-2011 | EP 2293503 A1 | | 09-03-2011 |
| | | | JP 2011071976 A | | 07-04-2011 |

EPO FORM P0459

For more details about this annex : see Official Journal of the European Patent Office, No. 12/82

39

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. KNIEVEL ; Z. SHI ; P. A. HOEHER ; G. AUER.** 2D graph-based soft channel estimation for MIMO-OFDM. *Proc. IEEE Int. Conf. on Communications (ICC), Cape Town, South Africa,* May 2010
- **C. KNIEVEL ; Z. SHI ; P. A. HOEHER ; G. AUER.** 2D graph-based soft channel estimation for MIMO-OFDM. *Proc. IEEE Int. Conf. on Communications (ICC,* May 2010
- **T. WO ; C. LIU ; P. A. HOEHER.** Graph-based iterative Gaussian detection with soft channel estimation for MIMO systems. *Proc. Int. ITG-Conf. on Source and Channel Coding (SCC,* January 2008
- **Z. SHI ; T. WO ; P. A. HOEHER ; G. AUER.** Graph-based soft iterative receiver for higher-order modulation. *Proc. IEEE International Conference on Communication and Technology (ICCT '2010,* November 2010

- **P. A. BELLO.** Characterization of randomly time-variant linear channels. *IEEE Trans. Commun.,* December 1963, vol. 11 (4), 360-393
- **F. R. KSCHISCHANG ; B. J. FREY ; H.-A. LOELIGER.** Factor graphs and the sumproduct algorithm. *IEEE Trans. Inf. Theory,* February 2001, vol. 47, 498-519
- **T. WO ; C. LIU ; P. A. HOEHER.** Graph-based iterative gaussian detection with soft channel estimation for MIMO systems. *Proc. ITG Int. Conf. on Source and Channel Coding, Ulm,* January 2008
- **T. WO ; C. LIU ; P. A. HOEHER.** Graph-based soft channel and data estimation for MIMO systems with asymmetric LDPC codes. *Proc. IEEE International Conference on Communications (ICC 2008), (Bejing, China,* May 2008, 620-624